# EUROPEAN PATENT APPLICATION

(11) **EP 3 001 305 A1**
(43) Date of publication of application: **30.03.2016**
(21) Application number: 15176324.0
(22) Date of filing: 10.07.2015
(51) Int. Cl.: G06F 3/14, G09G 5/34, G06F 3/0346

(54) **METHOD AND DEVICE FOR CONTROLLING DISPLAY OF VIDEO**

(30) Priority: 28.09.2014 CN 201410510351
(71) Applicant: Xiaomi Inc., Beijing 100085 (CN)
(72) Inventor: LI, Feiyun, 100085 BEIJING (CN); LI, Dan, 100085 BEIJING (CN); CHENG, Yu, 100085 BEIJING (CN); TANG, Mu, 100085 BEIJING (CN); GUO, Hongwei, 100085 BEIJING (CN)
(74) Representative: Underwood, Nicolas Patrick

(57) **Abstract**

The present disclosure relates to a method and a device for controlling a display of a video. The method includes: obtaining (101) the video photographed by a smart camera device; obtaining (102) direction change data of a terminal if the video is displayed on a screen of the terminal; and controlling (103) a display image of the video to slide on the screen according to the direction change data of the terminal.

## Description

### TECHNICAL FIELD

The present invention generally relates to a field of communication, and more particularly, to a method for controlling a display of a video and a device for controlling a display of a video.

### BACKGROUND

With the popularization of the wireless network, various smart devices with wireless access functions are widely used. These smart devices may communicate with each other after accessing into the wireless network. In a typical scene, a video photographed by a smart camera can be displayed in real time by a smart phone after the smart camera and the smart phone access into the wireless network respectively.

In the related art, when a user holds the smart phone in a conventional manner, a screen of the smart phone is in a vertical screen state. At this time, a height of the screen is less than a width of the screen. Since a height of the video photographed by the smart camera is typically greater than a width of the video, for example, a ratio between the height of the video and the width of the video is 16:9, if the user hopes that the entire video is displayed, it is necessary to compress the entire video such that the entire video can be displayed in a smaller window when the entire video is displayed on the screen in the vertical screen state. If the video is magnified to fill the screen, the width of the video may be beyond the height of the screen, and the user needs to slide the screen left or right such as to view a part of the video which is beyond the screen. Consequently, a lot of touch actions are required when the user watches the video, which is inconvenient for the user and leads to a poor viewing experience.

### SUMMARY

In order to overcome a problem in the related art that the viewing experience is poor since a lot of touch actions are required when the entire video is displayed, a method for controlling a display of a video and a device for controlling a display of a video are provided.

According to a first aspect, the invention relates to a method for controlling a display of a video, comprising:
obtaining the video photographed by a smart camera device;
obtaining direction change data of a terminal if the video is displayed on a screen of the terminal; and
controlling a display image of the video to slide on the screen according to the direction change data of the terminal.

The technical solution disclosed in the embodiments of the present disclosure can have advantageous effects as follows.

In a process of displaying the video photographed by the smart camera device, the terminal may obtain its direction change data in real time, such that the video may be slid on the screen of the terminal according to the direction change data. Since the user can watch the entire video without touch actions, it is convenient for the user to operate the video and the viewing experience is good.

In an embodiment, the step of obtaining the video photographed by a smart camera device comprises:
establishing a wireless connection with the smart camera device; and
receiving the video transmitted by the smart camera device via the wireless connection, in which the video comprises a video photographed in real time by the smart camera device, or a video in a video file locally stored in the smart camera device.

After a wireless connection between the terminal and the smart camera device is established, the terminal may advantageously obtain in real time the video transmitted by the smart camera device and may display the video photographed in real time by the smart camera device or the video stored in the smart camera device using the wireless access functions of the terminal and the smart camera device, thus meeting the user's different requirements.

In an embodiment, the step of obtaining direction change data of a terminal comprises:
starting a direction sensor, in which the direction sensor is configured to detect direction data of the terminal; and
obtaining the direction change data of the terminal according to the direction data of the terminal transmitted by the direction sensor at predetermined intervals.

Accordingly, the direction change data of the terminal may advantageously be obtained by the direction sensor provided on the terminal using the characteristic of detecting direction data in real time of the direction sensor, such that the display image of the video may be controlled to slide according to the direction change data, thus ensuring that the user can watch the entire video conveniently.

In an embodiment, before starting the direction sensor, the method further comprises:
registering a service interface for the direction sensor such that the direction sensor sends the direction data of the terminal via the service interface.

In an embodiment, the step of obtaining the direction change data of the terminal according to the direction data of the terminal transmitted by the direction sensor at predetermined intervals comprises:
receiving a first angle value transmitted by the direction sensor at a current predetermined interval;
obtaining a second angle value recorded by the terminal, in which the second angle value is an angle value transmitted by the direction sensor at a previous predetermined interval adjacent to the current predetermined interval; and
calculating a difference between the first angle value and the second angle value to obtain an angular change value defined as the direction change data of the terminal.

Accordingly, the angular change value defined as the direction change data may be obtained advantageously according to the angles detected by the direction sensor at different intervals and the sliding direction and the slippage of the video may be determined according to the angular change value, thus ensuring that the video is slid on the screen accurately and that the viewing experience of the user may be improved.

In an embodiment, the step of controlling the display image of the video to slide on the screen according to the direction change data of the terminal comprises:
obtaining a sliding direction of the video according to the angular change value if the direction change data of the terminal is the angular change value;
calculating a product of the angular change value and a predetermined pixel value and defining the product as a slippage of the video; and
controlling the display image of the video to slide on the screen in the sliding direction according to the slippage.

In an embodiment, the step of controlling the display image of the video to slide on the screen in the sliding direction according to the slippage comprises:
controlling the display image of the video to slide left or right on the screen according to the angular change value if the terminal rotates around a Y-axis in a three-dimensional rectangular coordinate system such that the angular change value is a change on an X-axis in the three-dimensional rectangular coordinate system;
controlling the display image of the video to slide up or down on the screen according to the angular change value if the terminal rotates around the X-axis in the three-dimensional rectangular coordinate system such that the angular change value is a change on the Y-axis in the three-dimensional rectangular coordinate system.

According to embodiments of the present disclosure, different sliding direction data of the video may be determined according to different types of angular change values, thus meeting the user's different viewing requirements on different ratios of videos.

According to a second aspect, the invention relates to a device for controlling a display of a video, comprising:
a first obtaining unit, configured to obtain the video photographed by a smart camera device;
a second obtaining unit, configured to obtain direction change data of a terminal if the video is displayed on a screen of the terminal; and
a controlling unit, configured to control a display image of the video to slide on the screen according to the direction change data of the terminal.

In an embodiment, the first obtaining unit comprises:
a wireless connection establishing subunit, configured to establish a wireless connection with the smart camera device; and
a video receiving subunit, configured to receive the video transmitted by the smart camera device via the wireless connection, in which the video comprises a video photographed in real time by the smart camera device, or a video in a video file locally stored in the smart camera device.

In an embodiment, the second obtaining unit comprises:
a direction sensor starting subunit, configured to start a direction sensor, in which the direction sensor is configured to detect direction data of the terminal; and
direction change data obtaining subunit, configured to obtain the direction change data of the terminal according to the direction data of the terminal transmitted by the direction sensor at predetermined intervals.

In an embodiment, the second obtaining unit further comprises:
a service interface registering subunit, configured to register a service interface for the direction sensor such that the direction sensor sends the direction data of the terminal via the service interface.

In an embodiment, the direction change data obtaining subunit comprises:
a first angle value receiving module, configured to receive a first angle value transmitted by the direction sensor at a current predetermined interval;
a second angle value obtaining module, configured to obtain a second angle value recorded by the terminal, in which the second angle value is an angle value transmitted by the direction sensor at a previous predetermined interval adjacent to the current predetermined interval; and
an angular change value calculating module, configured to calculate a difference between the first angle value and the second angle value to obtain an angular change value defined as the direction change data of the terminal.

In an embodiment, the controlling unit comprises:
a sliding direction obtaining subunit, configured to obtain a sliding direction of the video according to the angular change value if the direction change data of the terminal is the angular change value;
a slippage calculating subunit, configured to calculate a product of the angular change value and a predetermined pixel value and to define the product as a slippage of the video; and
a video adjusting subunit, configured to control the display image of the video to slide on the screen in the sliding direction according to the slippage.

In an embodiment, the video adjusting subunit comprises at least one of following modules:
an X-axis adjusting module, configured to control the display image of the video to slide left or right on the screen according to the angular change value if the terminal rotates around a Y-axis in a three-dimensional rectangular coordinate system such that the angular change value is a change on an X-axis in the three-dimensional rectangular coordinate system;
a Y-axis adjusting module, configured to control the display image of the video to slide up or down on the screen according to the angular change value if the terminal rotates around the X-axis in the three-dimensional rectangular coordinate system such that the angular change value is a change on the Y-axis in the three-dimensional rectangular coordinate system.

According to a third aspect, the invention relates to a device for controlling a display of a video, comprising:
a processor;
a memory configured to store instructions executable by the processor;
in which the processor is configured to:
   obtain the video photographed by a smart camera device;
   obtain direction change data of a terminal if the video is displayed on a screen of the terminal; and
   control a display image of the video to slide on the screen according to the direction change data of the terminal.

The devices benefit from the same above-mentioned advantages as the method for controlling a display of a video.

In one particular embodiment, the steps of the method for controlling a display of a video are determined by computer program instructions.

Consequently, according to a fourth aspect, the invention is also directed to a computer program for executing the steps of a method for controlling a display of a video as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for controlling a display of a video according to an exemplary embodiment of the present disclosure;
Fig. 2 is a schematic diagram illustrating an application scene of controlling a display of a video according to another exemplary embodiment of the present disclosure;
Fig. 3 is a flow chart of another method for controlling a display of a video according to an exemplary embodiment of the present disclosure;
Fig. 4A is a schematic diagram illustrating that a smart phone is in a three-dimensional rectangular coordinate system;
Fig. 4B is a schematic diagram illustrating an angular change value of a smart phone when the smart phone held by a user rotates leftward;
Fig. 4C is a schematic diagram illustrating an angular change value of a smart phone when the smart phone held by a user rotates rightward;
Fig. 4D is a schematic diagram illustrating an angular change value of a smart phone when the smart phone held by a user rotates downward;
Fig. 4E is a schematic diagram illustrating an angular change value of a smart phone when the smart phone held by a user rotates upward;
Fig. 4F is a schematic diagram illustrating that a received video is displayed in the middle of a screen of a smart phone;
Fig. 4G is a schematic diagram illustrating that a video is slid to the right of a screen of a smart phone;
Fig. 4H is a schematic diagram illustrating that a video is slid to the left of a screen of a smart phone;
Fig. 5 is a block diagram of a device for controlling a display of a video according to an exemplary embodiment of the present disclosure;
Fig. 6 is a block diagram of another device for controlling a display of a video according to an exemplary embodiment of the present disclosure;
Fig. 7 is a block diagram of another device for controlling a display of a video according to an exemplary embodiment of the present disclosure;
Fig. 8 is a block diagram of another device for controlling a display of a video according to an exemplary embodiment of the present disclosure;
Fig. 9 is a block diagram of another device for controlling a display of a video according to an exemplary embodiment of the present disclosure;
Fig. 10 is a block diagram of another device for controlling a display of a video according to an exemplary embodiment of the present disclosure;
Fig. 11 is a block diagram of another device for controlling a display of a video according to an exemplary embodiment of the present disclosure; and
Fig. 12 is a block diagram of a device for controlling a display of a video according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be understood that, although terms such as "first', "second" and "third" are used herein for describing various information, these information should not be limited by these terms. These terms are only used for distinguishing the same type of information. For example, first information may also be called second information, and similarly, the second information may also be called the first information, without departing from the scope of the present disclosure. As used herein, the term "if" may be construed to mean "when" or "upon" or "in response to determining", that a stated condition precedent is true, depending on the context.

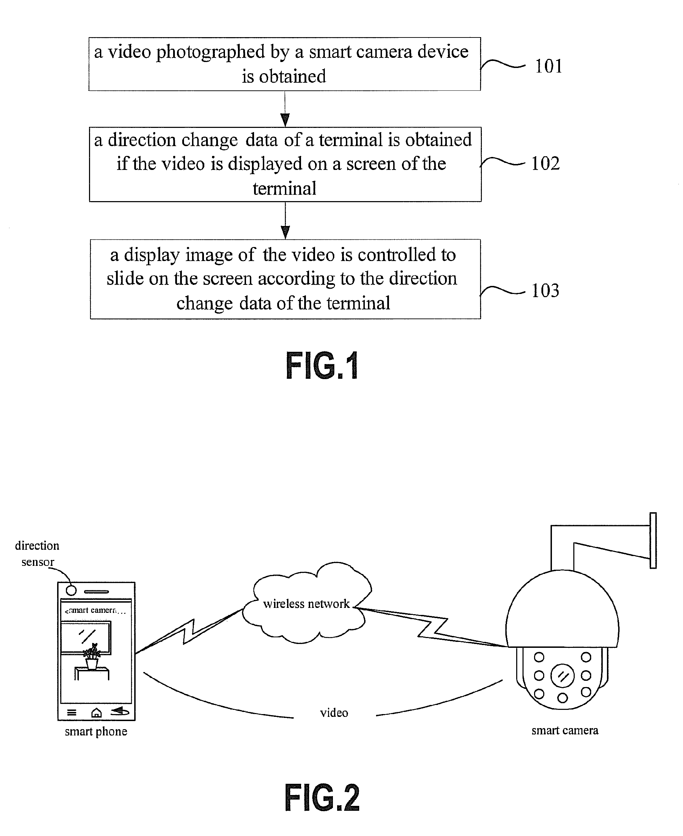

Fig. 1 is a flow chart of a method for controlling a display of a video according to an exemplary embodiment of the present disclosure. The method for controlling a display of a video may be applied in a terminal, including following steps.

In step 101, a video photographed by a smart camera device is obtained.

The smart camera device according to embodiments of the present disclosure is a smart device having a video photographing function and a wireless access function, such as a smart camera. The smart camera device may be installed as needed at any place with a monitoring requirement.

The smart terminal according to embodiments of the present disclosure is a smart device having a wireless access function and a video displaying function, for example, a portable terminal such as a smart phone, a tablet computer, a PDA (Personal Digital Assistant), etc.

The smart terminal may establish a wireless connection with the smart camera device associated with the smart terminal in advance, and may receive the video transmitted by the smart camera device via the wireless connection. The smart camera device may transmit the video photographed in real time by itself to the smart terminal after establishing the wireless connection with the smart terminal, or may store the video as a video file in its memory and then may transmit the video file locally stored in the memory to the smart terminal after establishing the wireless connection with the smart terminal.

In step 102, direction change data of a terminal is obtained if the video is displayed on a screen of the terminal.

According to embodiments of the present disclosure, a direction sensor (O-sensor) may be provided in the smart terminal. After obtaining the video from the smart camera device, the smart terminal displays the video on its screen for the user to watch. The smart terminal may start the direction sensor when the video is displayed, such that the direction sensor detects angles of the smart terminal and transmits the angles at predetermined intervals. Then, the smart terminal defines a difference between two angles transmitted by the direction sensor at two adjacent intervals as the direction change data of the smart terminal.

In step 103, a display image of the video is controlled to slide on the screen according to the direction change data of the terminal.

According to embodiments of the present disclosure, after obtaining the angular change value defined as the direction change data, the smart terminal may obtain a sliding direction of the video according to the angular change value, calculate a product of the angular change value and a predetermined pixel value and define the product as a slippage of the video. Then, the smart terminal controls the display image of the video to slide on the screen in the sliding direction according to the slippage.

According to the above-mentioned embodiment, in a process of displaying the video photographed by the smart camera device, the terminal may obtain the direction change data of the terminal in real time so as to control the display image of the video to slide on the screen according to the direction change data. Since the user may watch the entire video without touch actions, it is convenient for the user to operate the video and the viewing experience is good.

Referring to Fig. 2, Fig. 2 is a schematic diagram illustrating an application scene of controlling a display of a video according to an exemplary embodiment of the present disclosure.

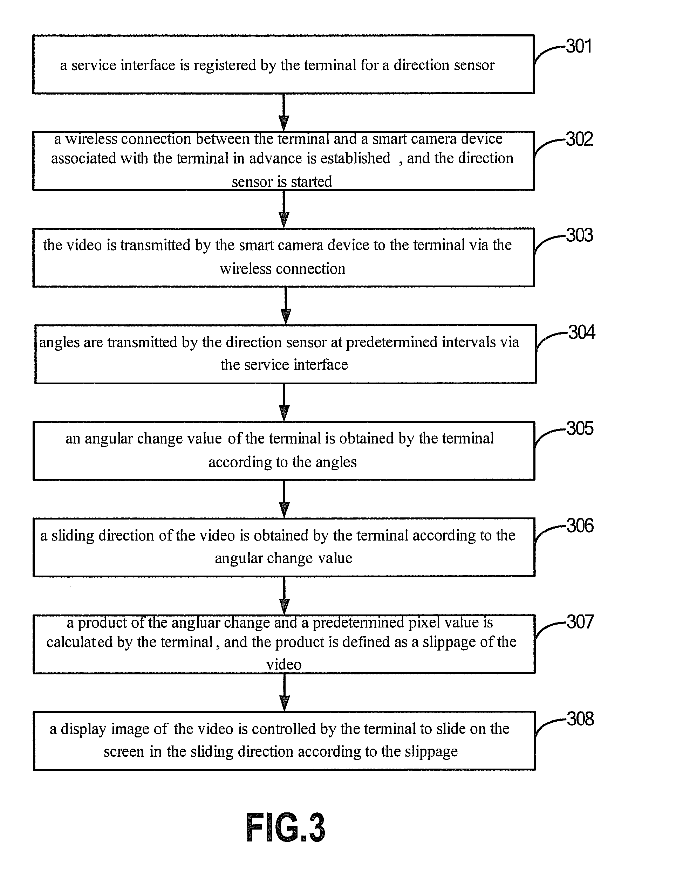

In Fig. 2, there are a smart phone defined as the smart terminal, and a smart camera defined as the smart camera device. A wireless connection may be established between the smart phone and the smart camera via the wireless network. The smart camera may transmit the video photographed by itself to the smart phone for displaying via the wireless connection. In the present disclosure, a direction sensor is provided in the smart phone. The direction sensor may detect angles of the smart phone in a process of displaying the video, such that the smart phone may control the display image of the video to slide on a screen of the smart phone automatically according to an angular change value, and thus it is convenient for the user to watch the video. In the following, the process of controlling a display of a video will be described in detail with reference to an embodiment illustrated in Fig. 3.

Fig. 3 is a flow chart of another method for controlling a display of a video according to an exemplary embodiment of the present disclosure. The method for controlling a display of a video may be applied in a terminal, including following steps.

In step 301, a service interface is registered by the terminal for a direction sensor.

The smart terminal according to embodiments of the present disclosure is a smart device having a wireless access function and a video displaying function, for example, a smart phone, a tablet computer, a PDA, etc. In this embodiment, the smart terminal being the smart phone is taken as an example to explain the method for controlling a display of a video, subsequent steps are not explained separately.

In embodiments of the present disclosure, the direction sensor may be integrated on the smart phone. The direction sensor may detect a direction of the smart phone by detecting an inertial force in the direction, such that angles that the smart phone rotates around three axes in a three-dimensional rectangular coordinate system may be returned. Initially, the service interface may be registered for the direction sensor by calling a system interface of the smart phone, such that the direction sensor may transmit the angles of the smart phone detected by itself to a processing component in the smart phone via the service interface.

In step 302, a wireless connection between the terminal and a smart camera device associated with the terminal in advance is established, and the direction sensor is started.

In embodiments of the present disclosure, a video displaying application may be installed in the smart phone in advance. The video displaying application may associate with some smart camera devices in advance. For example, a camera is installed by a user of the smart phone in his/her house, such that the user may monitor situations in his/her house.

If the user of the smart phone hopes to watch a video photographed by a camera device associated with the smart phone, the wireless connection with the camera device may be established and the direction sensor may be started after the video displaying application is started, such that the angles of the smart phone may be detected in a process of displaying the video.

In step 303, the video is transmitted by the smart camera device to the terminal via the wireless connection.

In embodiments of the present disclosure, a memory (for example, a local hard disk, etc.) may be provided in the smart camera device. After the smart camera device is started, the video photographed by the smart camera device may be stored as a video file in the local hard disk according to the shooting time. Therefore, the user may select a video photographed in real time by the smart camera device or a video file stored in the local hard disk of the smart camera device at some time to display by a displaying option configured in the video displaying application. The smart camera device may transmit the video selected by the user to the smart phone via the wireless connection.

In step 304, angles are transmitted by the direction sensor at predetermined intervals via the service interface.

In embodiments of the present disclosure, the direction sensor may detect the angles of the smart phone at predetermined intervals (such as five times per second) in a process of displaying the video by the smart phone, and may transmit the detected angles to the video displaying application of the smart phone via the registered service interface. The video displaying application may record the angles.

In step 305, an angular change value of the terminal is obtained by the terminal according to the angles.

In embodiments of the present disclosure, the smart phone defines an angle received at a current predetermined interval as a first angle value and obtains an angle recorded by itself at a previous predetermined interval adjacent to the current predetermined interval as a second angle value, and then calculates a difference between the first angle value and the second angle value to obtain the angular change value.

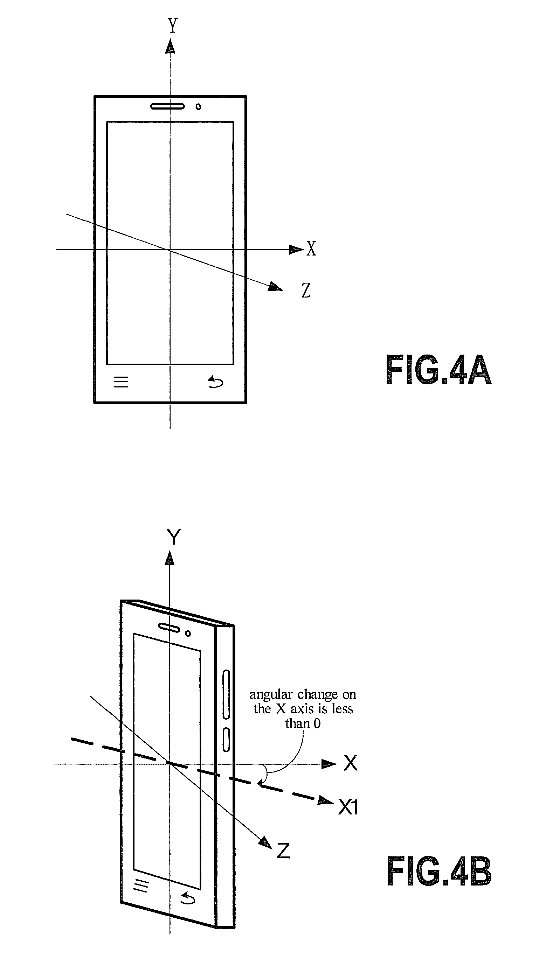

In the following, a process of obtaining the angular change value by the smart phone according to the angles transmitted by the direction sensor will be described with reference to Figs. 4A-4E.

Fig. 4A is a schematic diagram illustrating a smart phone is in a three-dimensional rectangular coordinate system. An X axis is directed to the right in the horizontal direction, a Y axis is directed upward in the vertical direction, and a Z axis is directed toward the front of the screen.

In an example, assuming that the ratio of the height of the video transmitted by the smart camera device to the width of the video is m:n, where m>n, such as 16:9, if the user holds the smart phone vertically and the video is displayed in a full-screen mode, only a requirement on the width direction is satisfied, and the video is beyond the screen in the height direction. Therefore, the user may rotate the smart phone held by himself/herself leftward and rightward, such that the direction sensor may detect angles of the smart phone when the smart phone rotates leftward and rightward.

Fig. 4B is a schematic diagram illustrating an angular change value of a smart phone when the smart phone held by a user rotates leftward. Compared to Fig. 4A, in Fig. 4B, the smart phone rotates leftward around the Y axis in the three-dimensional rectangular coordinate system, and an angular change value on the X axis is less than 0.

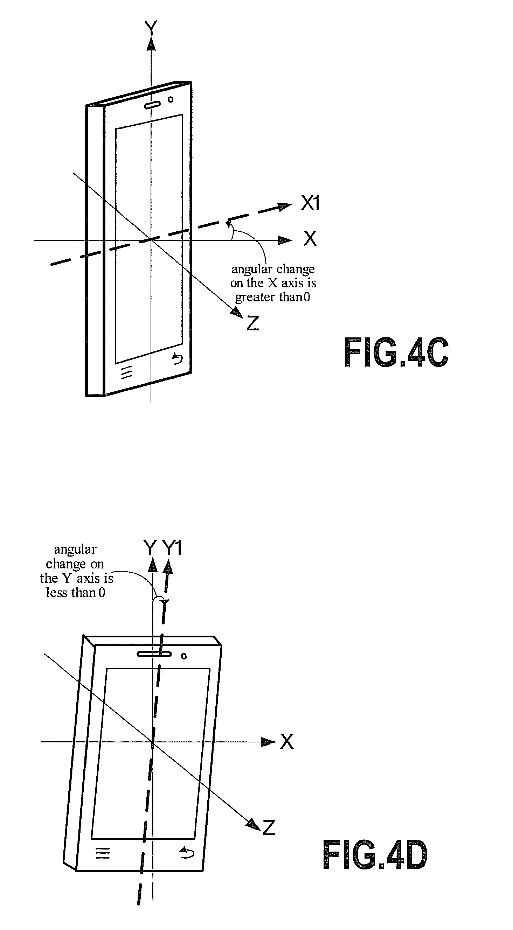

Fig. 4C is a schematic diagram illustrating an angular change value of a smart phone when the smart phone held by a user rotates rightward. Compared to Fig. 4A, in Fig. 4C, the smart phone rotates rightward around the Y axis in the three-dimensional rectangular coordinate system, and an angular change value on the X axis is greater than 0.

In another example, assuming that the ratio of the height of the video transmitted by the smart camera device to the width of the video is n:m, where n<m, such as 9:16, if the user holds the smart phone vertically and the video is displayed in a full-screen mode, only a requirement on the height direction is satisfied, and the video is beyond the screen in the width direction. Therefore, the user may rotate the smart phone held by himself/herself upward and downward, such that the direction sensor may detect angles of the smart phone when the smart phone rotates upward and downward.

Fig. 4D is a schematic diagram illustrating an angular change value of a smart phone when the smart phone held by a user rotates downward. Compared to Fig. 4A, in Fig. 4D, the smart phone rotates downward around the X axis in the three-dimensional rectangular coordinate system, and an angular change value on the Y axis is less than 0.

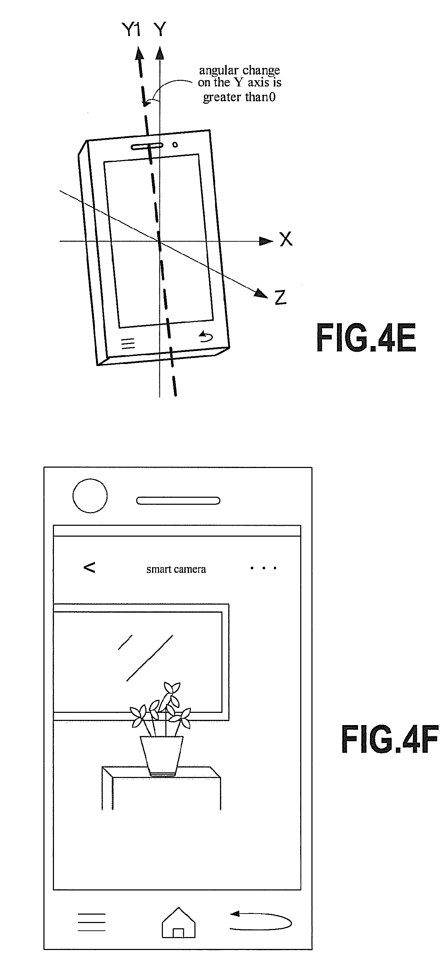

Fig. 4E is a schematic diagram illustrating an angular change value of a smart phone when the smart phone held by a user rotates upward. Compared to Fig. 4A, in Fig. 4E, the smart phone rotates upward around the X axis in the three-dimensional rectangular coordinate system, and an angular change value on the Y axis is greater than 0.

In step 306, a sliding direction of the video is obtained by the terminal according to the angular change value.

In embodiments of the present disclosure, if the terminal rotates around the Y-axis in the three-dimensional rectangular coordinate system such that the angular change value is a change on the X-axis in the three-dimensional rectangular coordinate system, the sliding direction of the video is a direction of sliding left or right. If the terminal rotates around the X-axis in the three-dimensional rectangular coordinate system such that the angular change value is a change on the Y-axis in the three-dimensional rectangular coordinate system, the sliding direction of the video is a direction of sliding up or down.

Referring to Fig. 4B, if the angular change value on the X axis is less than 0, the obtained sliding direction of the video is a direction of sliding rightward. Referring to Fig. 4C, if the angular change value on the X axis is greater than 0, the obtained sliding direction of the video is a direction of sliding leftward. Referring to Fig. 4D, if the angular change value on the Y axis is less than 0, the obtained sliding direction of the video is a direction of sliding upward. Referring to Fig. 4E, if the angular change value on the Y axis is greater than 0, the obtained sliding direction of the video is a direction of sliding downward.

In step 307, a product of the angular change and a predetermined pixel value is calculated by the terminal, and the product is defined as a slippage of the video.

In embodiments of the present disclosure, after the sliding direction of the video is obtained, the slippage of the video may be calculated according to the angular change such that the video is slid in the sliding direction according to the slippage. The slippage may be represented by a pixel value of the video in the sliding direction. When the slippage is calculated, the angular change value is multiplied by the predetermined pixel value and the product obtained by multiplying the angular change value by the predetermined pixel value is defined as the slippage of the video. The predetermined pixel value represents a pixel value that the video changes when the angular change value increases or decreases by one degree, for example, the predetermined pixel value may be 10. The bigger the predetermined pixel value, the faster the video is slid. Conversely, the smaller the predetermined pixel value, the slower the video is slid. Therefore, the predetermined pixel value may be configured flexibly according to the viewing requirement of the user, which is not limited herein.

In step 308, a display image of the video is controlled by the terminal to slide on the screen in the sliding direction according to the slippage.

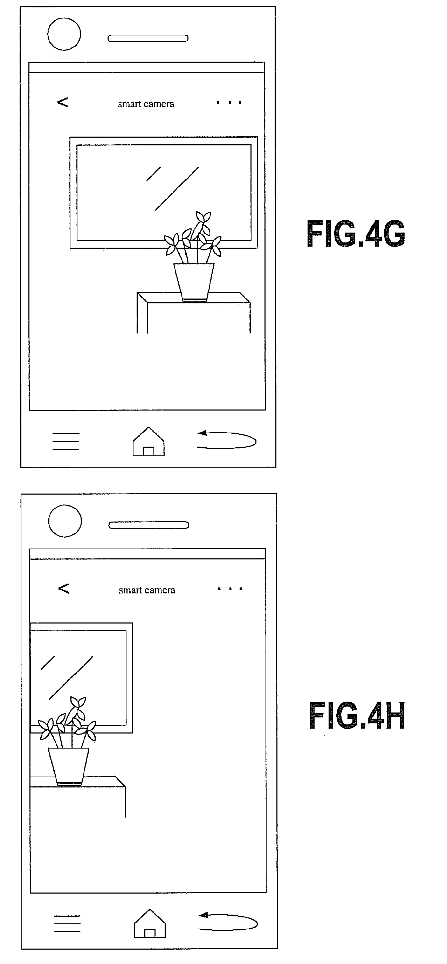

Referring to Figs. 4F-4H, schematic diagrams illustrating that the video is slid left or right are shown. Fig. 4F is a schematic diagram illustrating that a received video is displayed in the middle of a screen of a smart phone. Referring to Fig. 4G, when the user rotates the small phone leftward, the video is slid to the right such that the user may watch the left part of the entire video. Referring to Fig. 4H, when the user rotates the small phone rightward, the video is slid to the left such that the user may watch the right part of the entire video.

According to the above-mentioned embodiment, the terminal may obtain the direction change data of the terminal in real time in a process of displaying the video photographed by the smart camera device so as to control the display image of the video to slide on the screen according to the direction change data. Since the user may watch the entire video without touch actions, it is convenient for the user to operate the video and the viewing experience is good.

Corresponding to the above embodiments of the method for controlling a display of a video, the present disclosure further provides embodiments of the device for controlling a display of a video and the terminal.

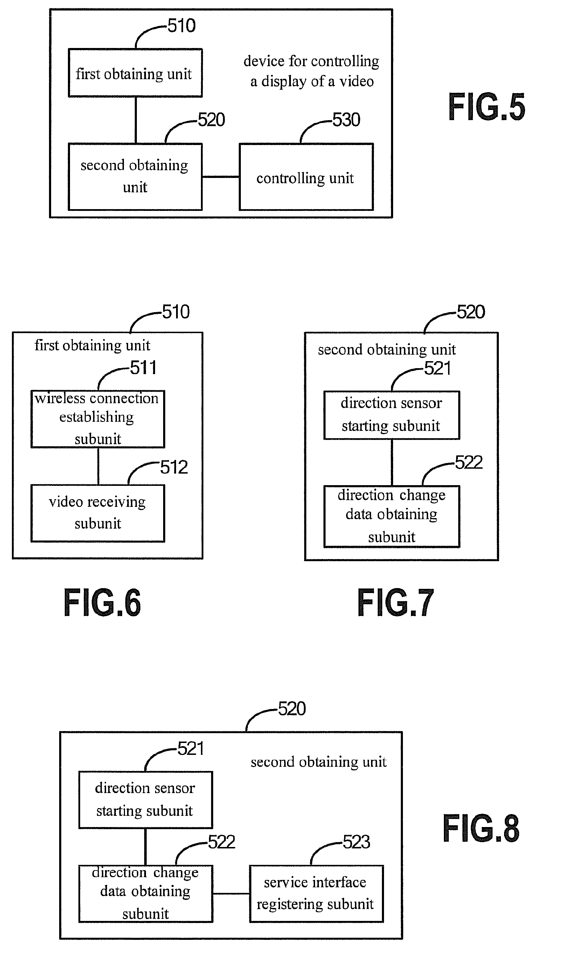

Fig. 5 is a block diagram of a device for controlling a display of a video according to an exemplary embodiment of the present disclosure. The device for controlling a display of a video includes a first obtaining unit 510, a second obtaining unit 520 and a controlling unit 530.

The first obtaining unit 510 is configured to obtain the video photographed by a smart camera device.

The second obtaining unit 520 is configured to obtain direction change data of a terminal if the video is displayed on a screen of the terminal.

The controlling unit 530 is configured to control a display image of the video to slide on the screen according to the direction change data of the terminal.

According to the above-mentioned embodiment, the terminal may obtain the direction change data of the terminal in real time in a process of displaying the video photographed by the smart camera device so as to control the display image of the video to slide on the screen according to the direction change data. Since the user may watch the entire video without touch actions, it is convenient for the user to operate the video and the viewing experience is good.

Fig. 6 is a block diagram of another device for controlling a display of a video according to an exemplary embodiment of the present disclosure. Based on the above embodiment illustrated in Fig. 5, the first obtaining unit 510 may include a wireless connection establishing subunit 511 and a video receiving subunit 512.

The wireless connection establishing subunit 511 is configured to establish a wireless connection with the smart camera device.

The video receiving subunit 512 is configured to receive the video transmitted by the smart camera device via the wireless connection, in which the video comprises a video photographed in real time by the smart camera device, or a video in a video file locally stored in the smart camera device.

According to the above-mentioned embodiment, after a wireless connection between the terminal and the smart camera device is established, the terminal may obtain in real time the video transmitted by the smart camera device and may display the video photographed in real time by the smart camera device or the video stored in the smart camera device using the wireless access functions of the terminal and the smart camera device, thus meeting the user's different requirements.

Fig. 7 is a block diagram of another device for controlling a display of a video according to an exemplary embodiment of the present disclosure. Based on the above embodiment illustrated in Fig. 5 or Fig. 6, the second obtaining unit 520 may include a direction sensor starting subunit 521 and direction change data obtaining subunit 522.

The direction sensor starting subunit 521 is configured to start a direction sensor, in which the direction sensor is configured to detect direction data of the terminal.

The direction change data obtaining subunit 522 is configured to obtain the direction change data of the terminal according to the direction data of the terminal transmitted by the direction sensor at predetermined intervals.

Fig. 8 is a block diagram of another device for controlling a display of a video according to an exemplary embodiment of the present disclosure. Based on the above embodiment illustrated in Fig. 7, the second obtaining unit 520 may further include a service interface registering subunit 523.

The service interface registering subunit 523 is configured to register a service interface for the direction sensor such that the direction sensor sends the direction data of the terminal via the service interface.

According to the above-mentioned embodiment, the direction change data of the terminal may be obtained by the direction sensor provided on the terminal using the characteristic of detecting direction data in real time of the direction sensor, such that the display image of the video may be controlled to slide according to the direction change data, thus ensuring that the user can watch the entire video conveniently.

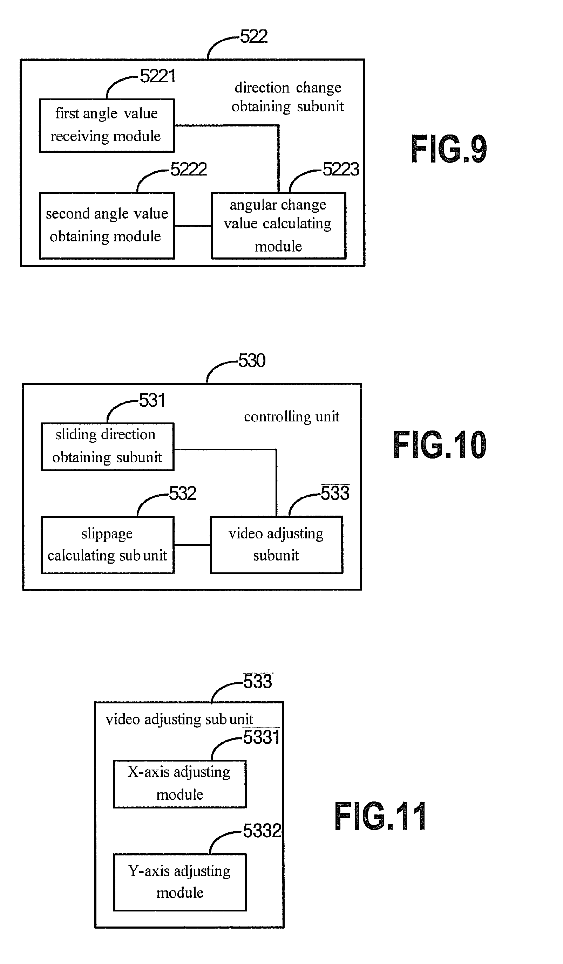

Fig. 9 is a block diagram of another device for controlling a display of a video according to an exemplary embodiment of the present disclosure. Based on the above embodiment illustrated in Fig. 7 or Fig. 8, the direction change data obtaining subunit 522 may further include a first angle value receiving module 5221, a second angle value obtaining module 5222 and an angular change value calculating module 5223.

The first direction angle receiving module 5221 is configured to receive a first angle value transmitted by the direction sensor at a current predetermined interval.

The second direction angle obtaining module 5222 is configured to obtain a second angle value recorded by the terminal, in which the second angle value is an angle value transmitted by the direction sensor at a previous predetermined interval adjacent to the current predetermined interval.

The angular change value calculating module 5223 is configured to calculate a difference between the first angle value and the second angle value to obtain an angular change value defined as the direction change data of the terminal.

Fig. 10 is a block diagram of another device for controlling a display of a video according to an exemplary embodiment of the present disclosure. Based on any of the above embodiments illustrated in Figs. 5-9, the controlling unit 530 may include a sliding direction obtaining subunit 531, a slippage calculating subunit 532 and a video adjusting subunit 533.

The sliding direction obtaining subunit 531 is configured to obtain a sliding direction of the video according to the angular change value if the direction change data of the terminal is the angular change value.

The slippage calculating subunit 532 is configured to calculate a product of the angular change value and a predetermined pixel value and to define the product as a slippage of the video.

The video adjusting subunit 533 is configured to control the display image of the video to slide on the screen in the sliding direction according to the slippage.

According to the above-mentioned embodiment, the angular change value defined as the direction change data may be obtained according to the angles detected by the direction sensor at different intervals and the sliding direction and the slippage of the video may be determined according to the angular change value, thus ensuring that the video is slid on the screen accurately and that the viewing experience of the user may be improved.

Fig. 11 is a block diagram of another device for controlling a display of a video according to an exemplary embodiment of the present disclosure. Based on the above embodiment illustrated in Fig. 10, the video adjusting subunit 533 may include at least one of following modules.

An X-axis adjusting module 5331 is configured to control the display image of the video to slide left or right on the screen according to the angular change value if the terminal rotates around a Y-axis in a three-dimensional rectangular coordinate system such that the angular change value is a change on an X-axis in the three-dimensional rectangular coordinate system.

A Y-axis adjusting module 5332 is configured to control the display image of the video to slide up or down on the screen according to the angular change value if the terminal rotates around the X-axis in the three-dimensional rectangular coordinate system such that the angular change value is a change on the Y-axis in the three-dimensional rectangular coordinate system.

It should be noted that, for convenient explanation, both the X-axis adjusting module and the Y-axis adjusting module are shown in Fig. 11. In particle practice, only one of the X-axis adjusting module and the Y-axis adjusting module is required to be configured as needed, which is not limited herein.

According to the above-mentioned embodiment, different sliding direction data of the video may be determined according to different types of angular change values, thus meeting the user's different viewing requirements on different ratios of videos.

Correspondingly, the present disclosure further provides a device for controlling a display of a video, including a professor, a memory configured to store instructions executable by the processor.

The professor is configured to:
obtain the video photographed by a smart camera device;
obtain direction change data of a terminal if the video is displayed on a screen of the terminal; and
control a display image of the video to slide on the screen according to the direction change data of the terminal.

With respect to the devices in the above embodiments, the specific manners for performing operations for individual modules therein have been described in detail in the embodiments regarding the methods for controlling a display of a video, which are not elaborated herein again.

Embodiments of the devices correspond to embodiments of the methods. For a related content, reference is made to partial descriptions of the embodiments of the methods. The above embodiments of the devices are exemplary. Units described as separate components may be or may not be physically separated. Components shown as units may be or may not be physical units, in other words, may be integrated in one position or distributed to a plurality of network units. Some or all of the modules may be selected to achieve the objective of the solution of the embodiments according to actual requirements. Those skilled in the art may understand and implement the present disclosure without making creative efforts.

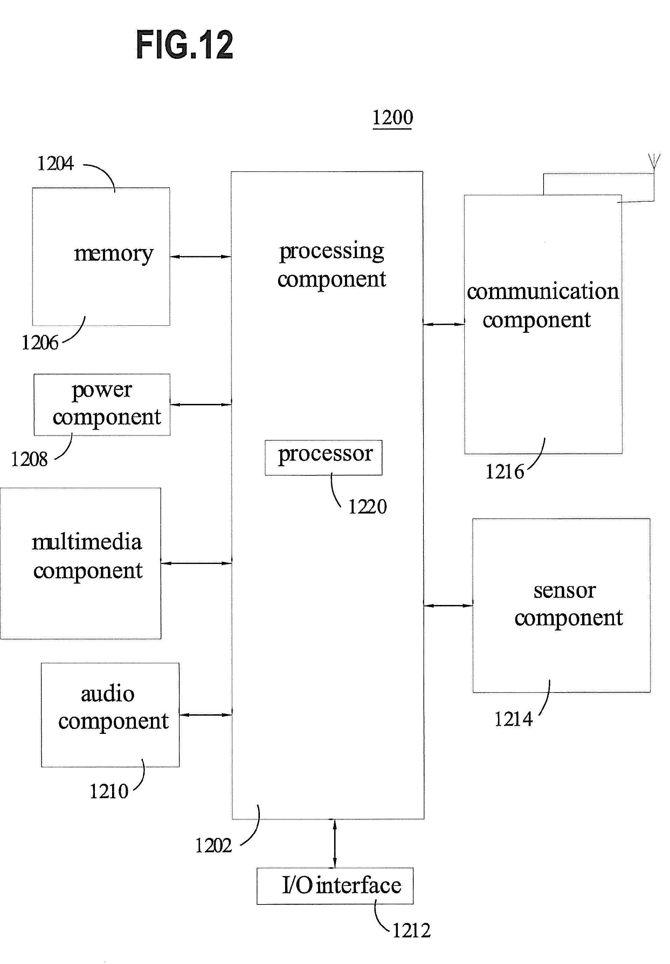

Fig. 12 is a block diagram of a device 1200 for controlling a display of a video according to an exemplary embodiment of the present disclosure. For example, the device 1200 may be a mobile phone with a routing function, a computer, a digital broadcasting terminal, a message receiving and sending equipment, a game controller, a tablet device, a medical equipment, a fitness equipment, a PDA and so on.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214 and a communication component 1216.

The processing component 1202 typically controls overall operations of the device 1200, such as the operations associated with display, telephone calls, data communications, camera operations, and recording operations. The processing component 1202 may include one or more processors 1220 to execute instructions so as to perform all or a part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, videos, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 is configured to provide power to various components of the device 1200. The power component 1206 may include a power management system, one or more power sources, and other components associated with the generation, control, and distribution of power in the device 1200.

The multimedia component 1208 includes a screen configured to provide an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 1208 includes a front camera and/or a rear camera. The front camera and the rear camera may receive external multimedia data when the device 1200 is in an operation mode such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 is configured to provide an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an on/off status of the device 1200, relative positions of components (e.g., a display screen and a keypad) of the device 1200. The sensor component 1214 may further detect a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may further include a light sensor, such as a CMOS or CCD image sensor, for use in imaging applications. In some embodiments, the sensor component 1214 may also include an accelerometer sensor, a gyroscope sensor, a magnetic sensor, a pressure sensor, a microwave sensor, or a temperature sensor.

The communication component 1216 is configured to facilitate a wired or wireless communication between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast control system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In exemplary embodiments, the device 1200 may be implemented with one or more electronic elements such as application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is further provided a non-transitory computer readable storage medium including instructions, such as the memory 1204 including instructions executable by the processor 1220 in the device 1200 to perform the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided, including stored therein instructions that, when executed by a processor of a terminal, causes the terminal to execute a method for controlling a display of a video. The method includes:
obtaining the video photographed by a smart camera device;
obtaining direction change data of a terminal if the video is displayed on a screen of the terminal; and
controlling a display image of the video to slide on the screen according to the direction change data of the terminal.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for controlling a display of a video, comprising:
obtaining (101) the video photographed by a smart camera device;
obtaining (102) direction change data of a terminal if the video is displayed on a screen of the terminal; and
controlling (103) a display image of the video to slide on the screen according to the direction change data of the terminal.

2. The method according to claim 1, wherein the step of obtaining the video photographed by a smart camera device comprises:
Establishing (302) a wireless connection with the smart camera device; and
receiving (303) the video transmitted by the smart camera device via the wireless connection, wherein the video comprises a video photographed in real time by the smart camera device, or a video in a video file locally stored in the smart camera device.

3. The method according to any of claims 1-2, wherein the step of obtaining direction change data of a terminal comprises:
starting (302) a direction sensor, wherein the direction sensor is configured to detect direction data of the terminal; and
obtaining (305) the direction change data of the terminal according to the direction data of the terminal transmitted by the direction sensor at predetermined intervals.

4. The method according to claim 3, before starting the direction sensor, further comprising:
registering (301) a service interface for the direction sensor such that the direction sensor sends the direction data of the terminal via the service interface.

5. The method according to any of claims 3-4, wherein the step of obtaining the direction change data of the terminal according to the direction data of the terminal transmitted by the direction sensor at predetermined intervals comprises:
receiving a first angle value transmitted by the direction sensor at a current predetermined interval;
obtaining a second angle value recorded by the terminal, wherein the second angle value is an angle value transmitted by the direction sensor at a previous predetermined interval adjacent to the current predetermined interval; and
calculating a difference between the first angle value and the second angle value to obtain an angular change value defined as the direction change data of the terminal.

6. The method according to any of claims 1-5, wherein the step of controlling the display image of the video to slide on the screen according to the direction change data of the terminal comprises:
obtaining (306) a sliding direction of the display image of the video according to the angular change value if the direction change data of the terminal is the angular change value;
calculating (307) a product of the angular change value and a predetermined pixel value and defining the product as a slippage of the video; and
controlling (308) the display image of the video to slide on the screen in the sliding direction according to the slippage.

7. The method according to claim 6, wherein the step of controlling the display image of the video to slide on the screen in the sliding direction according to the slippage comprises:
controlling the display image of the video to slide left or right on the screen according to the angular change value if the terminal rotates around a Y-axis in a three-dimensional rectangular coordinate system such that the angular change value is a change on an X-axis in the three-dimensional rectangular coordinate system;
controlling the display image of the video to slide up or down on the screen according to the angular change value if the terminal rotates around the X-axis in the three-dimensional rectangular coordinate system such that the angular change value is a change on the Y-axis in the three-dimensional rectangular coordinate system.

8. A device for controlling a display of a video, comprising:
a first obtaining unit (510), configured to obtain the video photographed by a smart camera device;
a second obtaining unit (520), configured to obtain direction change data of a terminal if the video is displayed on a screen of the terminal; and
a controlling unit (530), configured to control a display image of the video to slide on the screen according to the direction change data of the terminal.

9. The device according to claim 8, wherein the first obtaining unit (510) comprises:
a wireless connection establishing subunit (511), configured to establish a wireless connection with the smart camera device; and
a video receiving subunit (512), configured to receive the video transmitted by the smart camera device via the wireless connection, in which the video comprises a video photographed in real time by the smart camera device, or a video in a video file locally stored in the smart camera device.

10. The device according to any of claims 8-9, wherein the second obtaining unit (520) comprises:
a direction sensor starting subunit (521), configured to start a direction sensor, in which the direction sensor is configured to detect direction data of the terminal; and
direction change data obtaining subunit (522), configured to obtain the direction change data of the terminal according to the direction data of the terminal transmitted by the direction sensor at predetermined intervals.

11. The device according to claim 10, wherein the second obtaining (520) unit further comprises:
a service interface registering subunit (523), configured to register a service interface for the direction sensor such that the direction sensor sends the direction data of the terminal via the service interface.

12. The device according to any of claims 10-11, wherein the direction change data obtaining subunit (522) comprises:
a first angle value receiving module (5221), configured to receive a first angle value transmitted by the direction sensor at a current predetermined interval;
a second angle value obtaining module (5222), configured to obtain a second angle value recorded by the terminal, in which the second angle value is an angle value transmitted by the direction sensor at a previous predetermined interval adjacent to the current predetermined interval; and
an angular change value calculating module (5223), configured to calculate a difference between the first angle value and the second angle value to obtain an angular change value defined as the direction change data of the terminal.

13. The device according to any of claims 8-12, wherein the controlling unit (530) comprises:
a sliding direction obtaining subunit (531), configured to obtain a sliding direction of the video according to the angular change value if the direction change data of the terminal is the angular change value;
a slippage calculating subunit (532), configured to calculate a product of the angular change value and a predetermined pixel value and to define the product as a slippage of the video; and
a video adjusting subunit (533), configured to control the display image of the video to slide on the screen in the sliding direction according to the slippage.

14. The device according to claim 13, wherein the video adjusting subunit (533) comprises at least one of following modules:
an X-axis adjusting module (5331), configured to control the display image of the video to slide left or right on the screen according to the angular change value if the terminal rotates around a Y-axis in a three-dimensional rectangular coordinate system such that the angular change value is a change on an X-axis in the three-dimensional rectangular coordinate system;
a Y-axis adjusting module (5332), configured to control the display image of the video to slide up or down on the screen according to the angular change value if the terminal rotates around the X-axis in the three-dimensional rectangular coordinate system such that the angular change value is a change on the Y-axis in the three-dimensional rectangular coordinate system.

15. A computer program including instructions for executing the steps of a method for controlling a display of a video according to any one of claims 1 to 7 when said program is executed by a computer.
